# EUROPEAN PATENT APPLICATION

(11) **EP 3 243 594 A1**
(43) Date of publication of application: **15.11.2017**
(21) Application number: 15877104.8
(22) Date of filing: 28.12.2015
(51) Int. Cl.: B23K 9/02, B23K 9/00, B23K 9/167, B23K 9/23, B23K 15/00, B23K 26/21, B23K 33/00

(54) **WELD JOINT FOR THIN SHEET MEMBER, METHOD FOR MANUFACTURING CAN PROVIDED WITH SAID WELD JOINT, AND PIPE-LAYING METHOD FOR PIPE PROVIDED WITH SAID WELD JOINT**

(30) Priority: 08.01.2015 JP 2015001943
(71) Applicant: Mitsubishi Electric Corporation, Chiyoda-ku Tokyo 100-8310 (JP)
(72) Inventor: MONODANE, Takeshi, Tokyo 100-8310 (JP); OKA, Kohei, Tokyo 100-8310 (JP); GOTO, Kenji, Tokyo 100-8310 (JP); TAKEYAMA, Hidetoshi, Tokyo 100-8310 (JP); OKUI, Kenji, Tokyo 100-8310 (JP)
(74) Representative: Sajda, Wolf E.
(86) International application number: PCT/JP2015/086531
(87) International publication number: WO 2016/111232

(57) **Abstract**

An L-shaped end portion (1A) having a bending angle (θ1) that is a right angle is provided at one end of a first thin plate member (1), a Z-shaped end portion (2A) having an eave portion (2B) and having a bending angle (θ2, θ3) that is a right angle is provided at a second thin plate member (2), and engagement is achieved such that a contact surface (1C) of the L-shaped end portion (1A) and a contact surface (2C) of the Z-shaped end portion (2A) are in close contact with each other and a lower surface (2D) of the eave portion (2B) opposes a top portion (1B) of the L-shaped end portion (1A) with a predetermined gap (G) provided therebetween, whereby a weld joint (20) is formed.

## Description

### TECHNICAL FIELD

The present invention relates to a weld joint of thin plate members, a method for manufacturing a can provided with the weld joint, and a pipe-laying method for pipes provided with the weld joint.

### BACKGROUND ART

In welding metallic plates to each other, the quality of a welded part depends on conditions such as a method for holding the welded part, the positional relationship between the welded members and a heating torch, and an amount of heat input to the welded part. When the thicknesses of the metallic plates to be welded are thin, the conditions become stricter.

For example, a hot water storage type water heater, which has been popularized in recent years, includes a metallic large-capacity hot water storage tank for storing boiled water.

Regarding the structure of a can that is the hot water storage tank, generally, bowl-shaped components called end plates are welded to an upper side and a lower side of a tubular main body component called a trunk over the entire periphery, whereby the can is formed.

Regarding the peripheral welded part, joints having various shapes and welding methods have been considered so far (for example, see Patent Document 1).

However, with these methods, a gap occurs in the peripheral welded part, stress concentration occurs at the gap, and gap corrosion occurs at the gap depending on a liquid to be stored. Thus, for extending the life of the can, a butt joint having no gap is desirably formed.

Generally, in butt welding for thin plates, a favorable butt joint is not obtained unless a gap in a joint and displacement in a plate thickness direction (misalignment, that is, displacement between two plates in the plate thickness direction) is strictly managed.

Thus, a butt joint is achieved by holding the vicinity of a welded part from both sides with a jig or the like (for example, see Patent Document 2), and a weld bead shape similar to that by butt welding is obtained by modifying a joint shape (for example, see Patent Documents 3 and 4).

### LIST OF CITATIONS

### PATENT DOCUMENTS

Patent Document 1: Japanese Laid-Open Patent Publication JP 2007-009 290 A
Patent Document 2: Japanese Laid-Open Patent Publication JP 2002-263 835 A
Patent Document 3: Japanese Patent JP 2 593 233 B2
Patent Document 4: Japanese Laid-Open Patent Publication JP 2012-148 304 A

### SUMMARY OF THE INVENTION

### PROBLEMS TO BE SOLVED BY THE INVENTION

However, the hot water container that is the can disclosed in Patent Document 1 described above includes a trunk and two end plates and employs a structure in which end portions of both end plates are inserted into the trunk and welded from the outside. As a result, welding gaps are formed over the entire periphery.

There is a problem that when water containing chlorine ion enters the welding gap, gap corrosion occurs due to local battery action, so that the lifetime is shortened. In addition, there is a problem that stress is easily concentrated at an end portion of the gap, so that fatigue fracture easily occurs due to fluctuations of the internal pressure of the can.

For solving the above-described problems, a butt joint having no gap is desirably formed. Patent Document 2 described above discloses a can on which butt welding has been performed, and a tubular trunk and end plates are butt welded over the entire periphery from the inside.

However, for such a structure, during welding work, it is necessary to reduce the above-mentioned misalignment or gap at a butt-welded part as much as possible, and a holding jig is required at both the inner side and the outer side of the can in order to keep the positional relationship constant between butted end surfaces of the tubular trunk and each end plate.

Thus, the can needs to be provided with a large opening at a top that is unnecessary in terms of function. In addition, due to welding from the inner side, a large-scale dedicated tool is required for holding, rotating, or the like of a torch. As a result, there is a problem that the workability is poor and the manufacturing cost increases.

Patent Document 3 described above discloses a technique to press a cover plate having a tapered portion against a trunk and perform welding such that the tapered portion is melted. However, in this technique, the relative position between the trunk and the cover is held only by friction in a contact portion between the tapered portion and an edge portion of the trunk, a mechanism that manages a gap in the welded part is not present, and holding in the plate thickness direction is not performed.

Thus, there is a problem that, when the cover deforms radially outward or the trunk deforms inward due to variation of a local dimension of the trunk or the cover or thermal deformation during welding, weld joint portions do not come into contact with each other, and a gap and misalignment occur, so that welding becomes difficult.

For the purpose of solving these problems, in Patent Document 4, the applicant of the present technology has proposed, as a welding method for thin plate members and a method for manufacturing a can by using the welding method, methods in which a holding jig composed of a dedicated tool is made unnecessary by bending a joint end portion and performing holding before welding, occurrence of misalignment or a gap in a welded part is prevented, and a weld bead shape that is similar to that by butt welding and that has no stress-concentrated portion is obtained.

Specifically, a joint is configured in which an L-shaped end portion of a first thin plate member is raised at an obtuse angle and an L-shaped end portion of a second thin plate member is raised at an acute angle, and the raised portions are entirely melted by TIG welding or the like, whereby a weld bead shape that is similar to that by butt welding and that has no stress-concentrated portion is obtained.

However, the two end portions of the joint are tilted, and the rising length of a bent portion at the end of each end portion is about several times the plate thickness. Thus, the rising length becomes shorter as the plates are thinner.

For example, the rising length is about 2 mm when the plate thickness is 0.5 mm, and also a tilt angle is formed, so that dimension management is difficult. In particular, when objects are large, it takes time to perform dimension management over the overall length of a joint portion, which may cause a cost increase or a productivity decrease.

The present invention has been made to solve the above-described problems, and an object of the present invention is to provide: a weld joint of thin plate members that facilitates accuracy management of the dimension and the shape of a joint shape to be welded, prevents occurrence of misalignment, does not need a holding jig such as a dedicated tool during welding work, and allows a weld bead shape, which is similar to that by butt welding and which has no stress-concentrated portion, to be obtained; a method for manufacturing a can provided with the weld joint; and a pipe-laying method for pipes provided with the weld joint.

### SOLUTION TO THE PROBLEMS

A weld joint of thin plate members of the present invention is a weld joint of thin plate members including a first thin plate member and a second thin plate member, wherein
an L-shaped end portion having a bending angle as a right angle to form an L shape is provided at one end of the first thin plate member,
a Z-shaped end portion having an eave portion and having a bending angle as a right angle to form a Z shape is provided at one end of the second thin plate member,
each of the L-shaped end portion and the Z-shaped end portion is provided with a contact surface at which the L-shaped end portion and the Z-shaped end portion are in contact with each other,
the eave portion is provided to extend so as to cover the L-shaped end portion, and
engagement is achieved such that the contact surfaces of the first thin plate member and the second thin plate member are in close contact with each other and a lower surface of the eave portion and a top portion of the L-shaped end portion have a gap.

In addition, a method for manufacturing a can provided with the above-described weld joint of the present invention is a method for manufacturing a can by welding end portions of a trunk portion and an end plate portion to each other, wherein
the first thin plate member is the trunk portion or the end plate portion,
the second thin plate member is the end plate portion or the trunk portion, and
the weld joint is melted by welding.

Moreover, a pipe-laying method for pipes provided with the above-described weld joint of the present invention is a pipe-laying method for pipes, for welding end portions of two pipes to each other to join the two pipes together, wherein
the first thin plate member is one of the two pipes,
the second thin plate member is the other of the two pipes, and
the weld joint is melted by welding.

### EFFECT OF THE INVENTION

According to the weld joint of the thin plate members of the present invention, the weld joint has a simple structure, and, as a result, production is enabled with a high-accuracy dimension and shape at a low cost. In addition, since the L-shaped end portion and the Z-shaped end portion are engaged with each other with the gap provided therebetween, the positional relationship between the welded members is assuredly fixed.

As a result, occurrence of misalignment between the first thin plate member and the second thin plate member is prevented, and thus stable welding can be performed, so that a weld bead shape that is similar to that by butt welding can be obtained.

According to the method for manufacturing the can provided with the weld joint and the pipe-laying method for the pipes provided with the weld joint of the present invention, the following advantageous effects are achieved: welding can be performed without needing a special dedicated jig; and a weld bead shape having no possibility of occurrence of stress concentration is obtained.

### BRIEF DESCRIPTION OF THE DRAWINGS

- FIG. 1: is a diagram showing the structure of a weld joint according to Embodiment 1.
- FIG. 2: is a diagram showing a weld bead shape according to Embodiment 1.
- FIG. 3: is a diagram showing a method for manufacturing a can that is a hot water storage tank according to Embodiment 2.
- FIG. 4: is a diagram showing a pipe-laying method for pipes according to Embodiment 3.
- FIG. 5: is a diagram showing the configuration of a first pipe shown in FIG. 4.
- FIG. 6: is a diagram showing the configuration of a second pipe shown in FIG. 4.
- FIG. 7: is a diagram showing a pipe-laying method for pipes according to Embodiment 4.
- FIG. 8: is a diagram showing a weld bead shape according to Embodiment 4.

### DESCRIPTION OF EMBODIMENTS

### Embodiment 1

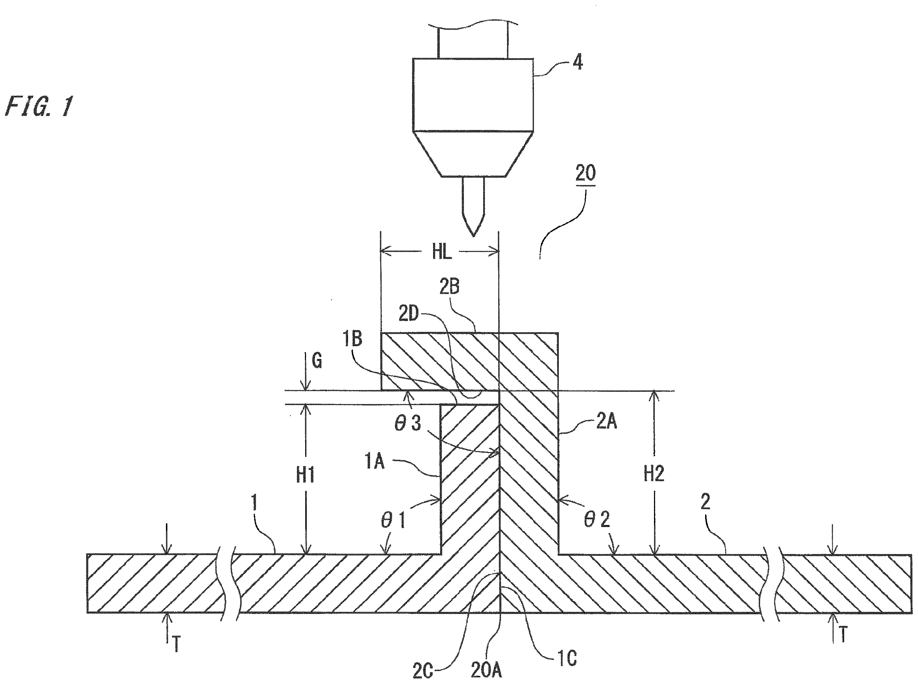

Hereinafter, Embodiment 1 of the present invention will be described with reference to the drawings. FIG. 1 is a cross-sectional view showing a cross-section of the structure of a weld joint of thin plate members according to Embodiment 1.

For example, FIG. 1 shows the structure of a weld joint in the case where two thin cylinders having the same inner diameter are joined to each other by welding. As shown in FIG. 1, an L-shaped end portion 1A is provided at one end portion of a first thin plate member 1 having a plate thickness T, so as to project at the outer diameter side of the cylinder.

Here, the plate thickness T is 0.5 mm to 2 mm. The L-shaped end portion 1A has a bending angle θ1 that is a right angle (90°). A joint height H1 of the L-shaped end portion 1A is set to be two to five times the plate thickness T of the first thin plate member 1. In addition, the L-shaped end portion 1A has a contact surface 1C that is in contact with a Z-shaped end portion 2A described later.

The Z-shaped end portion 2A having an eave portion 2B is provided at one end portion of a second thin plate member 2 having a plate thickness T and at the side opposing the L-shaped end portion 1A, so as to project at the outer diameter side of the cylinder.

Each of a bending angle θ2 and a bending angle θ3 of the Z-shaped end portion 2A is a right angle (90°). The Z-shaped end portion 2A has a joint height H2 to a lower surface 2D of the eave portion 2B. The eave portion 2B has a length HL and extends so as to cover the L-shaped end portion 1A.

The Z-shaped end portion 2A is provided with a contact surface 2C that is in contact with the contact surface 1C of the L-shaped end portion 1A. A predetermined gap G is provided between the lower surface 2D of the eave portion 2B and a top portion 1B of the L-shaped end portion 1 A. The value of the gap G is not greater than 0.2 mm. In addition, the length HL of the eave portion 2B is two to four times the plate thickness T of the second thin plate member 2.

The first thin plate member 1 and the second thin plate member 2 are compressed by a general pressure device that is not shown in FIG. 1, such that the top portion 1B of the L-shaped end portion 1 A and the lower surface 2D of the eave portion 2B of the Z-shaped end portion 2A oppose each other with the predetermined gap G provided therebetween and the contact surface 1C and the contact surface 2C are butted against and brought into close contact with each other, whereby a weld joint 20 is formed.

The weld joint 20 is engaged with the predetermined gap G provided as described above, and has a configuration in which the contact surface 1C and the contact surface 2C, which are raised at a right angle, can be entirely brought into contact with each other.

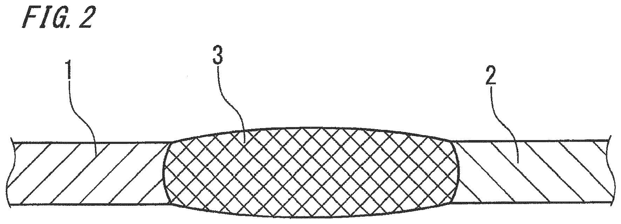

Thus, the positional relationship between the contact surface 1C and the contact surface 2C is more firmly fixed, so that occurrence of misalignment and a gap at a base portion 20A of the weld joint 20 is prevented. In this state, the weld joint 20 is heated and melted by a torch 4, and a weld bead shape 3 that is similar to that by butt welding and that is shown in FIG. 2 is obtained.

Each of the materials of the first thin plate member 1 and the second thin plate member 2 in Embodiment 1 is ferritic stainless steel, but may be austenitic stainless steel, general mild steel, copper, or a copper alloy. In the case with copper or a copper alloy, brazing is suitable instead of welding.

Since the weld joint 20 according to Embodiment 1 employs the L-shaped end portion 1A and the Z-shaped end portion 2A having simple shapes as described above, shape formation is easy, and an increase in the accuracy of the dimension and the shape thereof is easily achieved, resulting in low cost.

In addition, the contactability between the contact surface 1C and the contact surface 2C improves, and the first thin plate member 1 and the second thin plate member 2 are engaged with each other with the predetermined gap G provided therebetween, so that misalignment can be prevented.

Furthermore, by preventing a gap, which has an adverse effect on formation of the weld bead shape 3, from occurring before welding, the effect of heat input during welding improves, so that stable welding can be performed.

In Embodiment 1, an example has been shown in which the cylinders having the same inner diameter and the same plate thickness are used as the first thin plate member 1 and the second thin plate member 2.

However, members having different inner diameters or different plate thicknesses may be used, or members having a polygonal shape, not a cylindrical shape, may be used, or the present invention is also applicable to the case of welding short flat plates to form a long flat plate.

In addition, TIG welding has been shown as the welding method, but the welding method is not limited thereto and may be, for example, laser welding or electron-beam welding, which is a heat melting method.

### Embodiment 2

Next, Embodiment 2 will be described. Embodiment 2 is a method for manufacturing a can provided with the weld joint 20 of Embodiment 1 described above.

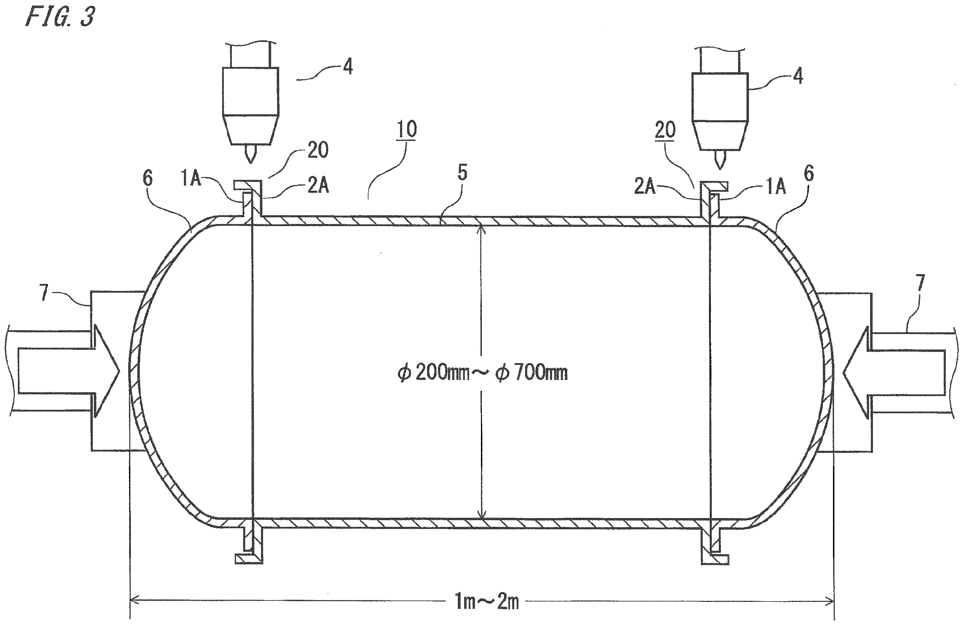

FIG. 3 is a cross-sectional view showing a method for manufacturing a metallic hot water storage tank of a hot water storage type water heater that is a can 10. In this drawing, the same parts as in Embodiment 1 described above are designated by the same reference characters, and the description thereof is omitted.

In a trunk portion 5, a Z-shaped end portion 2A that is the same as in the second thin plate member 2 of Embodiment 1 described above is formed at each of both end surfaces of a cylinder. End plate portions 6 are provided at both ends of the trunk portion 5.

In each end plate portion 6, an L-shaped end portion 1A that is the same as in the first thin plate member 1 of Embodiment 1 described above is formed at a location where the end plate portion 6 is connected to the trunk portion 5.

The trunk portion 5 and each end plate portion 6 are combined to each other, and similarly as in Embodiment 1, the top portion 1B and the lower surface 2D oppose each other with a predetermined gap G provided therebetween, and the contact surface 1C and the contact surface 2C are butted against each other, whereby a weld joint 20 is formed.

Pressing compression is performed from the outside of the end plate portion 6 by using a pressure device 7 such that the contact surface 1C and the contact surface 2C are brought into close contact with each other, and TIG welding is performed from above the weld joint 20 by the torch 4.

As described above, with the method for manufacturing the can of Embodiment 2, as a matter of course, the same advantageous effects as in Embodiment 1 described above are achieved.

In addition, since the can 10 is manufactured by such a method, heat input by the torch 4 sufficiently reaches the entirety of the weld joint 20, so that the weld joint 20 is more completely melted. In addition, a hot water storage tank that is the completed can 10, has less overall length variation, and has high dimension accuracy can be manufactured at low cost through a simple production process.

Since a weld is formed through complete melting, a can 10 that does not cause gap corrosion and stress concentration in a welded part and has improved durability and long life can be produced as a product in which a temperature cycle is applied or stress repeatedly occurs at a high temperature as in the hot water storage tank that is the can 10.

The can 10 of this embodiment has an inner diameter of 200 mm to 700 mm, an overall length of 1 m to 2 m, and a plate thickness of about 1 mm. In addition, an example has been shown in which the can 10 is applied to a hot water storage tank, but the can 10 is not limited to a tank for hot water, and may be applied to tanks for various liquids.

Moreover, each end portion of the trunk portion 5 has the Z-shaped end portion 2A, but the end portion structures of each end plate portion 6 and the trunk portion 5 may be interchanged with each other.

### Embodiment 3

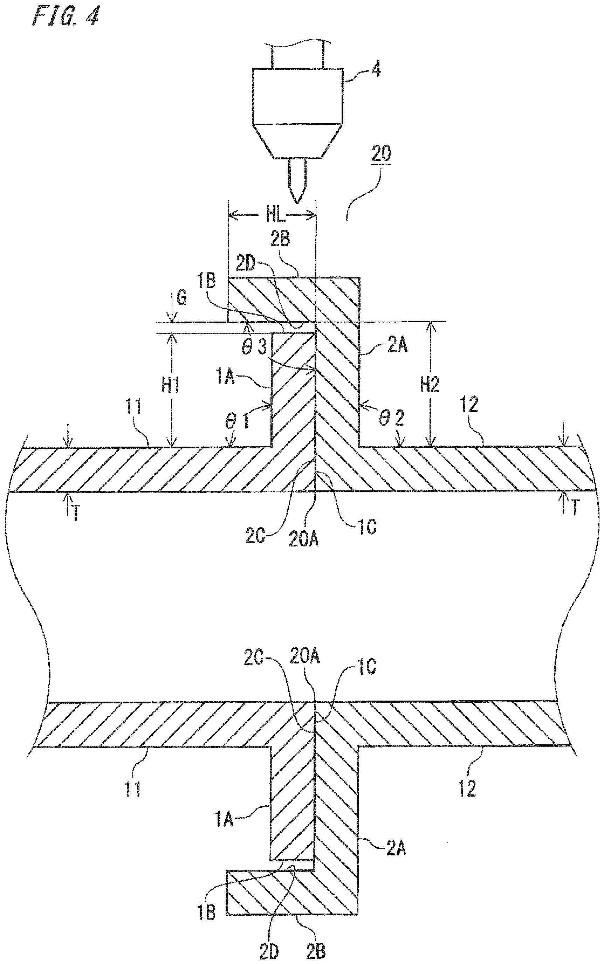

FIG. 4 shows a pipe-laying method for pipes, typified by pipes for water cooling and the like, according to Embodiment 3 of the present invention. Normally, as welding for connecting pipes, welding over the entire periphery is performed such that two pipes are overlapped with each other as in a so-called socket joint, or a butt joint is formed. When the two pipes are overlapped with each other, a gap is left, and thus a problem arises in terms of fatigue strength and corrosion resistance.

In the case of a butt joint, fatigue strength and corrosion resistance are high after welding, but securing the accuracy of butted end surfaces is important for performing welding over the entire periphery, and preliminary processing and alignment of the end surfaces during welding are very difficult. In the case of construction at a site, the level of difficulty increases further.

Embodiment 3 is a pipe-laying method for pipes by using the weld joint 20 of Embodiment 1 described above. In FIG. 4, the same parts as in Embodiment 1 described above are designated by the same reference characters, and the description thereof is omitted. In a first pipe 11, an L-shaped end portion 1A that is the same as in the first thin plate member 1 of Embodiment 1 described above is formed.

In addition, in a second pipe 12, a Z-shaped end portion 2A that is the same as in the second thin plate member 2 of Embodiment 1 described above is formed. Each of the first pipe 11 and the second pipe 12 has a plate thickness T of 0.2 mm to 2 mm.

The first pipe 11 and the second pipe 12 are brought into contact with each other, and similarly as in Embodiment 1, the top portion 1B and the lower surface 2D oppose each other with a predetermined gap G provided therebetween, and the contact surface 1C and the contact surface 2C are butted against each other, whereby a weld joint 20 is formed.

Pressing compression is performed such that the contact surface 1C and the contact surface 2C are brought into close contact with each other, and TIG welding is performed from above the weld joint 20 by the torch 4 to melt the L-shaped end portion 1A and the Z-shaped end portion 2A over the entire periphery.

At this time, the torch 4, and the L-shaped end portion 1A and the Z-shaped end portion 2A only need to be moved relative to each other. Thus, the torch 4, which is a heat source, may rotate, the first pipe 11 and the second pipe 12 may rotate, or both the torch 4, and the first pipe 11 and the second pipe 12 may rotate.

The welding method is not limited to TIG welding, and a welding method that is a heat melting method, for example, laser welding, electron-beam welding, or the like can be used. In addition, stainless steel, mild steel, or copper is generally used as the materials of the first pipe 11 and the second pipe 12. However, any metal that can be welded, for example, aluminum, titanium, or the like can be used.

In the pipe-laying method configured as described above, similarly as in Embodiment 1 described above, the joint dimension and shape can be easily managed, and thus close adhesion can be easily secured, so that welding can be stably performed.

In addition, similarly as in Embodiment 1 described above, further close adhesion can be secured over the entire periphery by sufficiently applying a pressing force to the two pipes.

In such a pipe-laying method for pipes, it is important to manage a misalignment amount that is an amount of displacement in the plate thickness T direction. Hereinafter, this will be further described.

For inhibiting misalignment in the cylinder shapes in the circumferential welding described above in the pipe-laying method for pipes, management of a diameter difference corresponding to a fitting tolerance is important. Here, the fitting diameter difference to be managed is a fitting diameter difference between portions of the weld joint 20 that are fitted to each other.

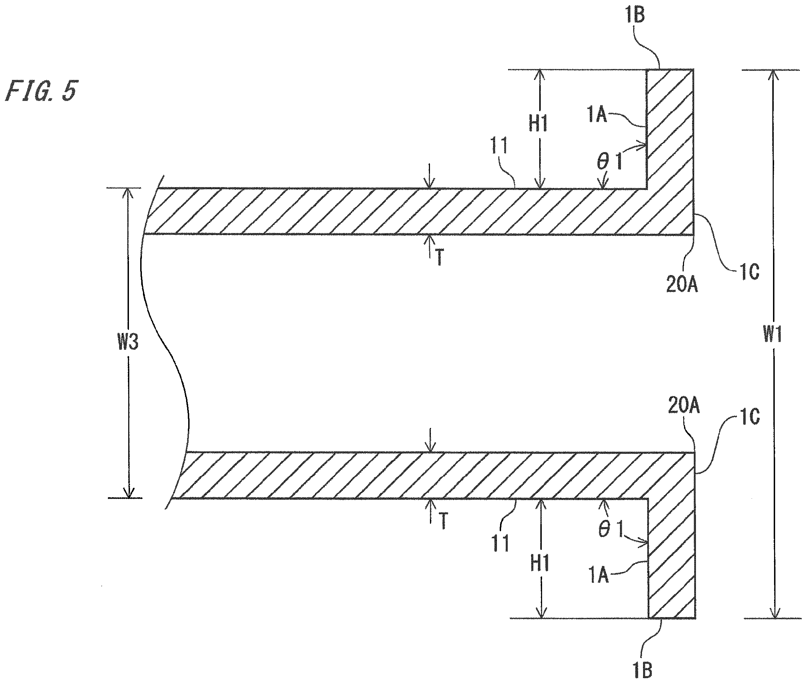

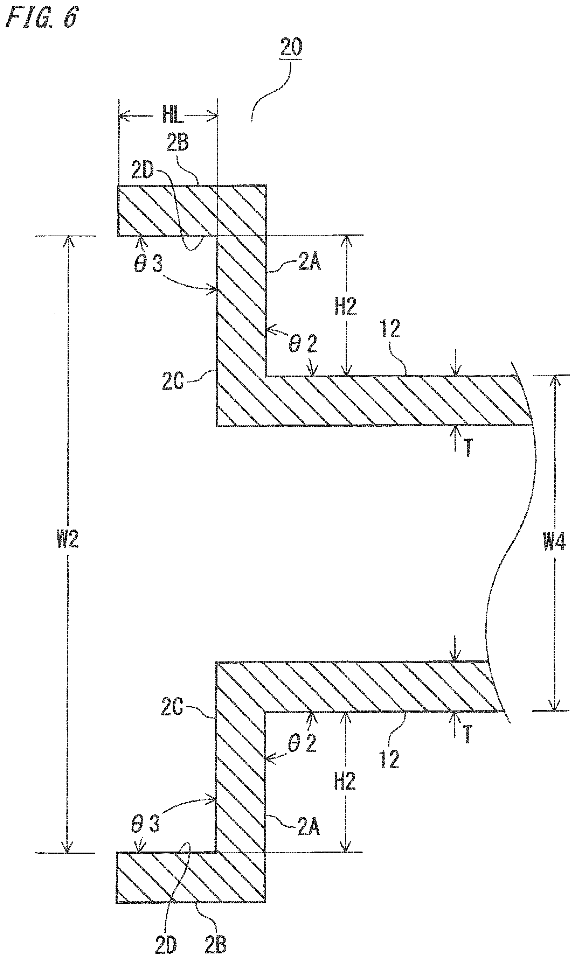

Specifically, the diameter at the end of the L-shaped end portion 1A of the first pipe 11 shown in FIG. 5 is referred to as a fitting diameter W 1. In addition, the diameter at the inner side of the eave portion 2B of the Z-shaped end portion 2A of the second pipe 12 shown in FIG. 6 is referred to as a fitting diameter W2.

The difference between the fitting diameter W1 and the fitting diameter W2 is the fitting diameter difference. By reducing the fitting diameter difference, misalignment can be reduced.

For reducing the fitting diameter difference, it is necessary to set the fitting diameters W1 and W2 with high accuracy. Each of the fitting diameters W1 and W2 is (a pipe diameter W3 or W4 that is the outer diameter of the first pipe 11 or the second pipe 12) + (the joint height H1 or H2) × 2.

The first pipe 11 and the second pipe 12 are generally formed by means of pressing, drawing, extruding, or the like. Thus, the processing accuracy of the pipe diameters W3 and W4 of the first pipe 11 and the second pipe 12 is high.

Therefore, securing the accuracy of the joint heights H1 and H2 is important for reducing the fitting diameter difference. With the shape in Embodiment 3, dimension and shape management is easy. Thus, the accuracy of the fitting diameters W1 and W2 is high, so that it becomes easy to secure the accuracy of the joint heights H1 and H2.

Accordingly, the fitting diameter difference can be reduced, and, as a result, misalignment can be inhibited. Therefore, a weld bead shape 3 that is similar that by butt welding can be formed over the entire periphery as a result of welding.

As described above, with the pipe-laying method for pipes of Embodiment 3, as a matter of course, the same advantageous effects as in Embodiment 1 described above are achieved. In addition, pipe welding can be performed which does not cause gap corrosion and stress concentration and provides long life and high strength.

### Embodiment 4

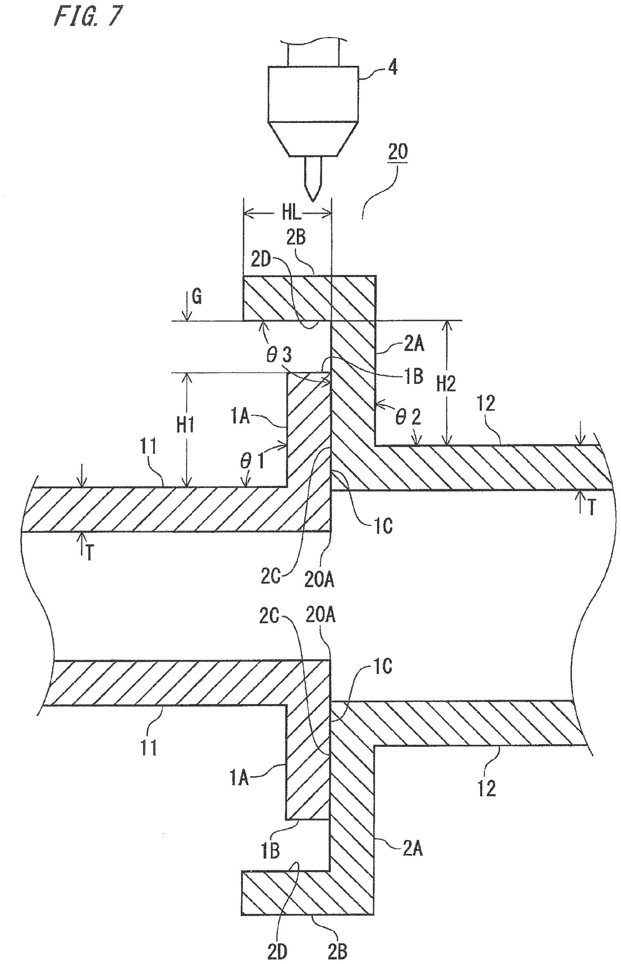

FIG. 7 is a diagram showing a pipe-laying method for pipes, typified by pipes for water cooling and the like, according to Embodiment 4 of the present invention. In Embodiment 3 described above, an example has been shown in which the pipe diameter of the first pipe and the pipe diameter of the second pipe are set to be substantially equal to each other for securing fatigue strength.

For a pipe-laying method that does not require fatigue strength, for example, for pipes for a cooling machine or the like, required fatigue strength is low since a constant pressure is applied to the pipes but is not repeatedly applied thereto. In this case, the welded part only needs to have water tightness, and the pipe diameter of the first pipe and the pipe diameter of the second pipe may be different from each other.

In the drawing, the same parts as in Embodiment 1 described above are designated by the same reference characters, and the description thereof is omitted. In Embodiment 4, the case will be described in which a pipe diameter W3 of the first pipe 11 is shorter than a pipe diameter W4 of the second pipe 12.

Since the pipe diameter W3 of the first pipe 11 is shorter than the pipe diameter W4 of the second pipe 12, the location where the contact surface 1C and the contact surface 2C are in close contact with each other is reduced as compared to Embodiment 3 described above.

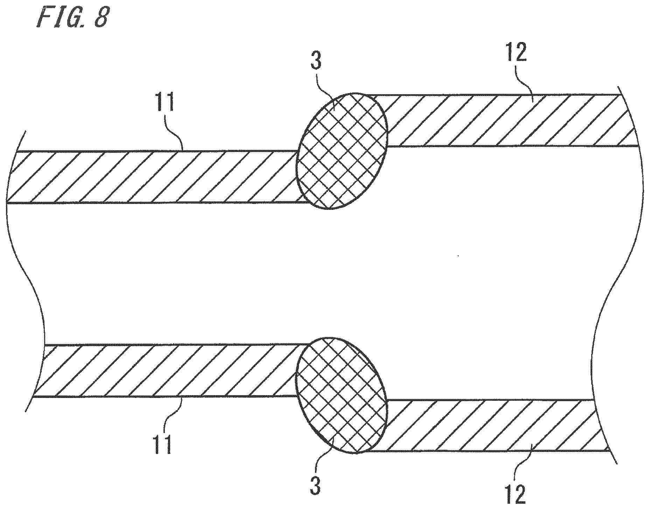

However, similarly as in each of the embodiments described above, since joint height H1 < joint height H2, a weld bead shape 3 shown in FIG. 8 is formed after welding, and thus a pipe-laying method for pipes in which the diameter continuously changes can be performed.

The pipe diameter difference between the pipe diameter W3 of the first pipe 11 and the pipe diameter W4 of the second pipe 12 desirably satisfies pipe diameter difference < approximately plate thickness T of pipe diameter × 2.

With the pipe-laying method for pipes of Embodiment 4 configured as described above, as a matter of course, the same advantageous effects as in each of the embodiments described above are achieved. In addition, pipe welding can be performed by which gap corrosion is reduced and long life is provided.

It is noted that, within the scope of the present invention, the respective embodiments may be freely combined with each other, or each of the respective embodiments may be modified or abbreviated as appropriate.

## Claims

1. A weld joint of thin plate members including a first thin plate member and a second thin plate member , wherein
an L-shaped end portion having a bending angle as a right angle to form an L shape is provided at one end of the first thin plate member ,
a Z-shaped end portion having an eave portion and having a bending angle as a right angle to form a Z shape is provided at one end of the second thin plate member,
each of the L-shaped end portion and the Z-shaped end portion is provided with a contact surface at which the L-shaped end portion and the Z-shaped end portion are in contact with each other,
the eave portion is provided to extend so as to cover the L-shaped end portion, and
engagement is achieved such that the contact surfaces of the first thin plate member and the second thin plate member are in close contact with each other and a lower surface of the eave portion and a top portion of the L-shaped end portion have a gap.

2. The weld joint of the thin plate members according to claim 1,
wherein each of the first thin plate member and the second thin plate member has a plate thickness of 0.5 mm to 2 mm.

3. The weld joint of the thin plate members according to claim 1 or 2,
wherein
the L-shaped end portion has a height that is two to five times the plate thickness of the first thin plate member, and
the gap is not greater than 0.2 mm.

4. The weld joint of the thin plate members
according to any one of claims 1 to 3,
wherein the eave portion has a length that is two to four times the plate thickness of the second thin plate member.

5. A method for manufacturing a can provided with the weld joint according to any one of claims 1 to 4, by welding end portions of a trunk portion and an end plate portion to each other, wherein
- the first thin plate member is the trunk portion or the end plate portion,
the second thin plate member is the end plate portion or the trunk portion, and
the weld joint is melted by welding.

6. The method for manufacturing the can according to claim 5,
wherein an inner diameter of the trunk portion and an inner diameter of the end plate portion are equal to each other.

7. The method for manufacturing the can according to claim 5 or 6,
wherein materials of the trunk portion and the end plate portion are stainless materials, and the welding is laser welding or electron-beam welding.

8. A pipe-laying method for pipes, for welding end portions of two pipes provided with the weld joint according to any one of claims 1 to 4, to each other to join the two pipes together, wherein
the first thin plate member is one of the two pipes ,
the second thin plate member is the other of the two pipes, and the weld joint is melted by welding.

9. The pipe-laying method for pipes according to claim 8,
wherein materials of the two pipes are stainless materials, and the welding is TIG welding, laser welding, or electron-beam welding.
